# EUROPEAN PATENT APPLICATION

(11) **EP 2 863 583 A1**
(43) Date of publication of application: **22.04.2015**
(21) Application number: 12883476.9
(22) Date of filing: 31.08.2012
(51) Int. Cl.: H04L 12/26, H04L 12/801

(54) **METHOD AND DEVICE FOR DEFENDING BEARER ATTACK**

(71) Applicant: Huawei Technologies Co., Ltd., Longgang District Shenzhen, Guangdong 518129 (CN)
(72) Inventor: CHEN, Guan, Shenzhen Guangdong 518129 (CN)
(74) Representative: Epping - Hermann - Fischer
(86) International application number: PCT/CN2012/080882
(87) International publication number: WO 2014/032292

(57) **Abstract**

The present invention relates to the field of communications and, in particular, to a method and a device for defending against bearer attack, and the method includes: stopping resource scheduling for a terminal, when a network device detects that a bearer transmission flow of the terminal is greater than or equal to a flow threshold value set by the network device. The present invention can defend the network device (including a base station) against attack from the terminal which would initiate the attack by utilizing high transmission performance under high network transmission requirements.

## Description

### TECHNICAL FIELD

The present invention relates to the field of communications and, in particular, to a method and a device for defending against bearer attack.

### BACKGROUND

QCI (Qos Class Identifier, Qos class identifier) is a scale value, which is a measurement of a specific packet forwarding behavior (such as a packet loss ratio and a packet delay budget) provided to a SDF (Service Data Flow, service data flow), and meanwhile applied to GBR (Guarantee Bit Rate, guarantee bit rate) and Non-GBR (non-guarantee bit rate) bearers, and for designating a packet forwarding manner (such as scheduling weight, acceptance threshold, queue management threshold, link layer protocol configuration and so on) of a controlling bearer level defined in an access node. QCI is one of the most important QoS parameters of EPS (Evolved Packet System, evolved packet system) bearer, and is a quantitative grade to indicate the QoS property which should be provided by the EPS to the SDF.

In an E-UTRAN (Evolved-UMTS Terrestrial Radio Access Network, evolved-UMTS terrestrial radio access network) network, the QCI is classified and meanwhile some behaviors under different QCIs are specified in 3GPP protocol. Table 1 shows some requirements of classification to QCIs:

**Table 1**

| **QCI** | **Resource Type** | **Priority** | **Packet Delay Budget (NOTE 1)** | **Packet Error Loss Rate (NOTE 2)** |
|---|---|---|---|---|
| 1 (NOTE 3) | GBR | 2 | 100 ms | 10⁻² |
| 2 (NOTE 3) | | 4 | 150 ms | 10⁻³ |
| 3 (NOTE 3) | | 3 | 50 ms | 10⁻³ |
| 4 (NOTE 3) | | 5 | 300 ms | 10⁻⁶ |
| 5 (NOTE 3) | Non-GBR | 1 | 100 ms | 10⁻⁶ |
| 6 (NOTE 4) | | 6 | 300 ms | 10⁻⁶ |
| 7 (NOTE 3) | | 7 | 100 ms | 10⁻³ |
| 8 (NOTE 5) | | 8 | 300 ms | 10⁻⁶ |
| 9 (NOTE 6) | | 9 | | |

Seen from Table 1 above, some QCIs have high transmission requirements, for example, for such a SDF in a case of QCI=5, the requirement on time delay reaches 100ms, and the requirement on the packet error loss rate also reaches 10⁻⁶. Such high transmission requirements inevitably cause the priority increased to a certain height when the base station processes the corresponding SDF. If some dedicated bearer(s) (such as QCI5) with high transmission requirements is/are established in a cell of the base station for the terminal, it is most likely to cause desired scheduling to other bearers with relatively low transmission requirements unavailable, or cause starvation of other users or low wireless network throughput, or a malicious user may attack the base station by utilizing high transmission performance.

### SUMMARY

Accordingly, the present invention provides a method and a network device for defending against bearer attack, which can defend the network device (including a base station) against attack from a terminal that would initiate the attack by utilizing high transmission performance under high network transmission requirements.

A first aspect of the present invention provides a method for defending against bearer attack, including:
stopping resource scheduling for a terminal, when a network device detects that a bearer transmission flow of the terminal is greater than or equal to a flow threshold value set by the network device.

In a first possible implementation in combination with the first aspect, the method for defending against bearer attack further includes:
releasing the terminal, when the network device detects that the bearer transmission flow of the terminal is greater than or equal to an attack threshold value set by the network device.

In a second possible implementation in combination with the first possible implementation of the first aspect, the attack threshold value is greater than the flow threshold value.

In a third possible implementation in combination with the first aspect, the first possible implementation of the first aspect, or the second possible implementation of the first aspect, the method for defending against bearer attack further includes:
configuring, by a terminal bearer configuring gateway, the bearer transmission flow of the terminal for the terminal, the bearer transmission flow of the terminal being less than or equal to a bearer transmission flow threshold value set by the terminal bearer configuring gateway.

In a fourth possible implementation in combination with the third possible implementation of the first aspect, the terminal bearer configuring gateway sets different bearer transmission flow threshold values for different types of terminals.

In a fifth possible implementation in combination with the first aspect, or the first possible implementation of the first aspect, or the second possible implementation of the first aspect, or the third possible implementation of the first aspect, or the fourth possible implementation of the first aspect, the network device sets different flow threshold values for terminals in different geographic regions; and/or
the network device sets different flow threshold values for different types of terminals.

In a sixth possible implementation in combination with the first possible implementation of the first aspect, or the second possible implementation of the first aspect, the network device sets different attack threshold values for terminals in different geographic regions; and/or
the network device sets different attack threshold values for different types of terminals.

In a seventh possible implementation in combination with the first aspect, or the first possible implementation of the first aspect, or the second possible implementation of the first aspect, or the third possible implementation of the first aspect, or the fourth possible implementation of the first aspect, or the fifth possible implementation of the first aspect, or the sixth possible implementation of the first aspect, the network device includes a base station, a base station controller or an access point.

A second aspect of the present invention provides a network device, including:
a detecting module, configured to detect a bearer transmission flow of a terminal dominated by the network device;
a first processing module, configured to stop resource scheduling for the terminal, when the detecting module detects that the bearer transmission flow of the terminal is greater than or equal to a flow threshold value set by the network device.

In a first possible implementation in combination with the second aspect, the network device further includes:
a second processing module, configured to release the terminal, when the detecting module detects that the bearer transmission flow of the terminal is greater than or equal to an attack threshold value set by the network device.

In a second possible implementation in combination with the first possible implementation of the second aspect, the network device further includes:
a setting module, configured to set the flow threshold value and the attack threshold value.

In a third possible implementation in combination with the second possible implementation of the second aspect, the setting module sets different flow threshold values for terminals in different geographic regions; and/or the setting module sets different flow threshold values for different types of terminals.

In a fourth possible implementation in combination with the first possible implementation of the second aspect, the setting module sets different attack threshold values for terminals in different geographic regions; and/or the setting module sets different attack threshold values for different types of terminals.

A third aspect of the present invention provides a system for defending against bearer attack, including:
a network device, configured to detect a bearer transmission flow of a terminal dominated by the network device, and stop resource scheduling for the terminal, when detecting that the bearer transmission flow of the terminal is greater than or equal to a flow threshold value set by the network device.

In a first possible implementation in combination with the third aspect, the network device is further configured to release the terminal, when detecting that the bearer transmission flow of the terminal is greater than or equal to an attack threshold value set by the network device.

In a second possible implementation in combination with the third aspect, or the first possible implementation of the third aspect, the system for defending against bearer attack further includes:
a terminal bearer configuring gateway, adapted to configure the bearer transmission flow of the terminal for the terminal, the bearer transmission flow of the terminal being less than or equal to a bearer transmission flow threshold value set by the signaling gateway.

In a third possible implementation in combination with the second possible implementation of the third aspect, the terminal bearer configuring gateway sets different bearer transmission flow threshold values for different types of terminals.

In a fourth possible implementation in combination with the third aspect, or the first possible implementation of the third aspect, or the second possible implementation of the third aspect, or the third possible implementation of the third aspect, the network device includes a base station, a base station control or an access point.

A fourth aspect of the present invention provides a computer storage medium storing a program, which includes a part or all of steps of the method for defending against bearer attack according to the present invention when the program is executed.

A fifth aspect of the present invention provides a network device, including an input unit, an output unit, a memory and a processor, where the processor is configured to perform steps as follows:
stopping resource scheduling for a terminal, when detecting that a bearer transmission flow of the terminal is greater than or equal to a flow threshold value set by the network device.

In a first possible implementation in combination with the fifth aspect, the processor is further configured to perform steps as follows:
releasing the terminal, when detecting that the bearer transmission flow of the terminal is greater than or equal to an attack threshold value set by the network device.

In a second possible implementation in combination with the first possible implementation of the fifth aspect, the attack threshold value is greater than the flow threshold value.

In a third possible implementation in combination with the fifth aspect, or the first possible implementation of the fifth aspect, or the second possible implementation of the fifth aspect, the processor is further configured to perform steps as follows: configuring the bearer transmission flow of the terminal for the terminal, the bearer transmission flow of the terminal being less than or equal to a bearer transmission flow threshold value set by a terminal bearer configuring gateway.

In a fourth possible implementation in combination with the third possible implementation of the fifth aspect, the processor sets different bearer transmission flow threshold values for different types of terminals.

In a fifth possible implementation in combination with the fifth aspect, or the first possible implementation of the fifth aspect, or the second possible implementation of the fifth aspect, the processor sets different flow threshold values for terminals in different geographic regions; and/or
the processor sets different flow threshold values for different types of terminals.

In a sixth possible implementation in combination with the fifth aspect, or the first possible implementation of the fifth aspect, the processor sets different attack threshold values for terminals in different geographic regions; and/or
the processor sets different attack threshold values for different types of terminals.

In a seventh possible implementation in combination with the fifth aspect, or the first possible implementation of the fifth aspect, or the second possible implementation of the fifth aspect, or the third possible implementation of the fifth aspect, or the fourth possible implementation of the fifth aspect, or the fifth possible implementation of the fifth aspect, or the sixth possible implementation of the fifth aspect, the network device includes a base station.

As described above, in some possible implementations of the present invention, resource scheduling is stopped for the terminal when the network device detects that the bearer transmission flow of the terminal is greater than or equal to the flow threshold value set by the network device, and the terminal is released when detecting that the bearer transmission flow of the terminal is greater than or equal to the attack threshold value set by the network device, and the terminal bearer configuring gateway configures the bearer transmission flow of the terminal for the terminal, the bearer transmission flow of the terminal being less than or equal to the bearer transmission flow threshold value set by the terminal bearer configuring gateway. Such can defend the network device (including the base station) against attack from the terminal which would initiate the attack by utilizing high transmission performance under high network transmission requirements.

### BRIEF DESCRIPTION OF DRAWINGS

FIG. 1 is a schematic flow chart of a method for defending against bearer attack according to a first embodiment of the present invention;
FIG. 2 is a schematic flow chart of a method for defending against bearer attack according to a second embodiment of the present invention;
FIG. 3 is a schematic flow chart of a method for defending against bearer attack according to a third embodiment of the present invention;
FIG. 4 is a schematic structural diagram of a network device according to a first embodiment of the present invention;
FIG. 5 is a schematic structural diagram of a network device according to a second embodiment of the present invention;
FIG. 6 is a schematic structural diagram of a system for defending against bearer attack according to a first embodiment of the present invention; and
FIG. 7 is a schematic structural diagram of a network device according to a third embodiment of the present invention.

### DESCRIPTION OF EMBODIMENTS

In some possible implementations of the present invention, resource scheduling is stopped for a terminal when a network device detects that a bearer transmission flow of the terminal is greater than or equal to a flow threshold value set by the network device, and the terminal is released when detecting that the bearer transmission flow of the terminal is greater than or equal to an attack threshold value set by the network device, and a terminal bearer configuring gateway configures the bearer transmission flow of the terminal for the terminal, the bearer transmission flow of the terminal being less than or equal to a bearer transmission flow threshold value set by the terminal bearer configuring gateway. Such can defend the network device (including a base station) against attack from the terminal which would initiate the attack by utilizing high transmission performance under high network transmission requirements.

The embodiments of the present invention will be described in further detail with reference to the accompanying drawings below.

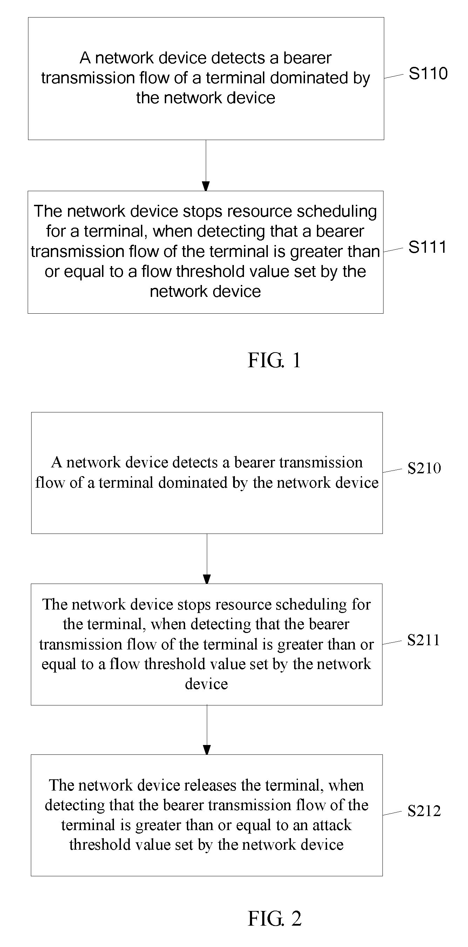

FIG. 1 is a schematic flow chart of a method for defending against bearer attack according to a first embodiment of the present invention. As shown in FIG.1, the method includes:
Step S110: A network device detects a bearer transmission flow of a terminal dominated by the network device.

In some possible implementations, the network device includes a base station, a base station controller or an access point.

Step S111: The network device stops resource scheduling for the terminal, when detecting that the bearer transmission flow of the terminal is greater than or equal to a flow threshold value set by the network device.

In some possible implementations, the network device can set the flow threshold value in advance, and the terminal can be restrained, through the flow threshold value, from excessively using the resources.

In some possible implementations, the network device can set different flow threshold values for terminals in different geographic regions;

In some possible implementations, the network device can set different flow threshold values for different types of terminals. For example, the base station can set different flow threshold values for R8/R9/R10 terminals.

As described above, in some possible implementations of the present invention, resource scheduling is stopped for the terminal when the network device detects that the bearer transmission flow of the terminal is greater than or equal to the flow threshold value set by the network device, and such can defend the network device (including the base station) against attack from the terminal which would initiate the attack by utilizing high transmission performance under high network transmission requirements (such as QCI5).

FIG. 2 is a schematic flow chart of a method for defending against bearer attack according to a second embodiment of the present invention, and this embodiment is an extension of the first embodiment. As shown in FIG.2, the method includes:
Step S210: A network device detects a bearer transmission flow of a terminal dominated by the network device.

In some possible implementations, the network device may include a base station, a base station controller or an access point.

Step S211: The network device stops resource scheduling for the terminal, when detecting that the bearer transmission flow of the terminal is greater than or equal to a flow threshold value set by the network device.

In some possible implementations, the network device can set the flow threshold value in advance, and the terminal can be restrained, through the flow threshold value, from excessively using the resources.

In some possible implementations, the network device can set different flow threshold values for terminals in different geographic regions;

In some possible implementations, the network device can set different flow threshold values for different types of terminals. For example, the base station can set different flow threshold values for R8/R9/R10 terminals.

Step S212: The network device releases the terminal, when detecting that the bearer transmission flow of the terminal is greater than or equal to an attack threshold value set by the network device.

In some possible implementations, the network device can further defend against bearer attack by setting the attack threshold value, and recover the system resources by releasing the terminal.

In some possible implementations, the network device sets different attack threshold values for terminals in different geographic regions;

In some possible implementations, the network device sets different attack threshold values for different types of terminals.

In some possible implementations, the attack threshold value is greater than the flow threshold value.

As described above, in some possible implementations of the present invention, resource scheduling is stopped for the terminal when the network device detects that the bearer transmission flow of the terminal is greater than or equal to the flow threshold value set by the network device, and the terminal is released when the network device detects that the bearer transmission flow of the terminal is greater than or equal to the attack threshold value set by the network device. Such can defend the network device (including the base station) against attack from the terminal which would initiate the attack by utilizing high transmission performance under high network transmission requirements.

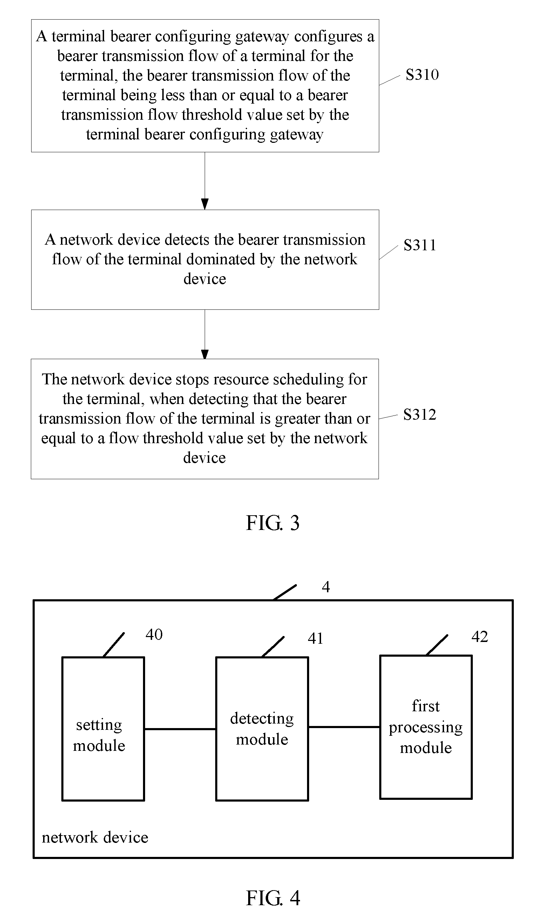

FIG. 3 is a schematic flow chart of a method for defending against bearer attack according to a third embodiment of the present invention. This embodiment is an extension of the first embodiment. As shown in FIG.3, the method includes:
Step S310, A terminal bearer configuring gateway configures a bearer transmission flow of a terminal for the terminal, the bearer transmission flow of the terminal being less than or equal to a bearer transmission flow threshold value set by the terminal bearer configuring gateway.

In some possible implementations, the terminal bearer configuring gateway can be a signaling gateway.

In some possible implementations, the terminal bearer configuring gateway can restrain the bearer transmission flow of the terminal when opening an account for the terminal, which plays a role of defending against bearer attack as well.

In some possible implementations, the terminal bearer configuring gateway can set different bearer transmission flow threshold values for different types of terminals. For example, the base station can set different bearer transmission flow threshold values for R8/R9/R10 terminals.

Step S311: A network device detects the bearer transmission flow of the terminal dominated by the network device.

In some possible implementations, the network device includes a base station, a base station controller or an access point.

Step S312: The network device stops resource scheduling for the terminal, when detecting that the bearer transmission flow of the terminal is greater than or equal to a flow threshold value set by the network device.

In some possible implementations, the network device can set the flow threshold value in advance, and the terminal can be restrained, through the flow threshold value, from excessively using the resources.

In some possible implementations, the network device can set different flow threshold values for terminals in different geographic regions;

In some possible implementations, the network device can set different flow threshold values for different types of terminals. For example, the base station can set different flow threshold values for R8/R9/R10 terminals.

As described above, in some possible implementations of the present invention, resource scheduling is stopped for the terminal when the network device detects that the bearer transmission flow of the terminal is greater than or equal to the flow threshold value set by the network device, and the terminal bearer configuring gateway configures the bearer transmission flow of the terminal for the terminal, the bearer transmission flow of the terminal being less than or equal to the bearer transmission flow threshold value set by the terminal bearer configuring gateway. Such can defend the network device (including the base station) against attach from the terminal which would initiate the attack by utilizing high transmission performance under high network transmission requirements.

It can be understood that, in some possible implementations, the method for defending against bearer attack also can be formed by combining Step S310 in the third embodiment on the basis of the second embodiment. No further details will be given here.

In order to better implement various solutions in the method embodiments of the present invention, an associated device is also provided in embodiments of the present invention.

FIG. 4 is a schematic structural diagram of a network device according to a first embodiment of the present invention, where the network device can be used for implementing the method embodiments of the present invention; in some possible implementations, the network device 4 may be a base station, a base station controller or an access point. As shown in FIG. 4, the network device 4 according to the present invention can include a setting module 40, a detecting module 41 and a first processing module 42, where:

The setting module 40 is configured to set a flow threshold value, i.e. the flow threshold value set by the network device.

The detecting module 41 is configured to detect a bearer transmission flow of a terminal dominated by the network device.

The first processing module 42 is configured to stop resource scheduling for the terminal, when the detecting module 41 detects that the bearer transmission flow of the terminal is greater than or equal to the flow threshold value set by the network device.

In some possible implementations, the setting module 40 can set the flow threshold value in advance, and the terminal can be restrained, through the flow threshold value, from excessively using the resources.

In some possible implementations, the setting module 40 can set different flow threshold values for terminals in different geographic regions;

In some possible implementations, the setting module 40 can set different flow threshold values for different types of terminals. For example, the base station can set different flow threshold values for R8/R9/R10 terminals.

As described above, in some possible implementations of the present invention, resource scheduling is stopped for the terminal when the network device 4 detects that the bearer transmission flow of the terminal is greater than or equal to the flow threshold value set by the network device, and such can defend the network device (including the base station) against attack from the terminal which would initiate the attack by utilizing high transmission performance under high network transmission requirements (such as QCI5).

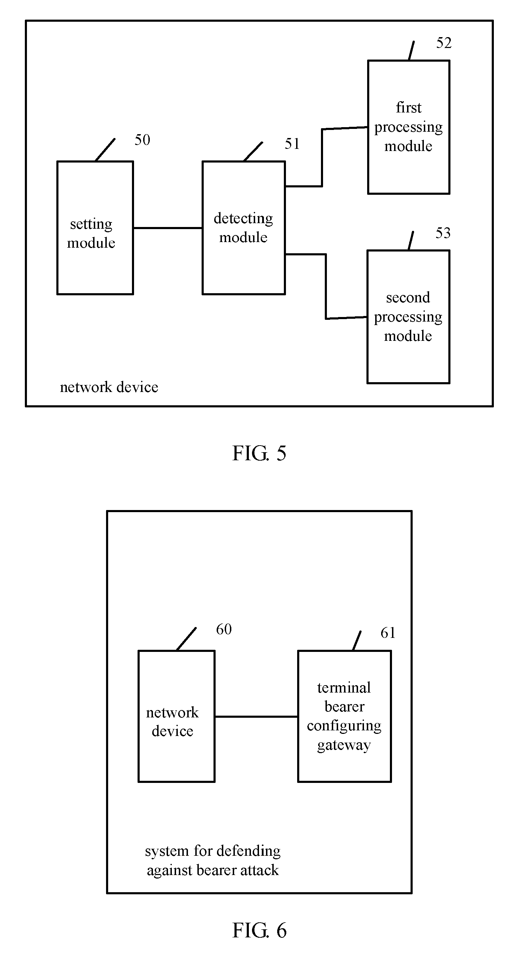

FIG. 5 is a schematic structural diagram of a network device according to a second embodiment of the present invention, where the network device can be used for implementing the method embodiments of the present invention; in some possible implementations, the network device 5 may be a base station, a base station controller or an access point. As shown in FIG. 5, the network device 5 according to the present invention can include a setting module 50, a detecting module 51, a first processing module 52 and a second processing module 53, where:

The setting module 50 is configured to set a flow threshold value and an attack threshold value, i.e. the flow threshold value and the attack threshold value set by the network device.

The detecting module 51 is configured to detect a bearer transmission flow of a terminal dominated by the network device.

The first processing module 52 is configured to stop resource scheduling for the terminal, when the detecting module 51 detects that the bearer transmission flow of the terminal is greater than or equal to the flow threshold value set by the network device.

The second processing module 53 is configured to release the terminal, when the detecting module 51 detects that the bearer transmission flow of the terminal is greater than or equal to the attack threshold value set by the network device.

In some possible implementations, the setting module 50 can set the flow threshold value and the attack threshold value in advance, and the terminal can be restrained, through the flow threshold value, from excessively using the resources.

In some possible implementations, the setting module 50 can set different flow threshold values for terminals in different geographic regions;

In some possible implementations, the setting module 50 can set different flow threshold values for different types of terminals. For example, the base station can set different flow threshold values for R8/R9/R10 terminals.

In some possible implementations, the setting module 50 can further defend against bearer attack by setting the attack threshold value, and recover the system resources by releasing the terminal.

In some possible implementations, the setting module 50 can set different attack threshold values for terminals in different geographic regions;

In some possible implementations, the setting module 50 can set different attack threshold values for different types of terminals.

In some possible implementations, the attack threshold value can be greater than the flow threshold value.

As described above, in some possible implementations of the present invention, resource scheduling is stopped for the terminal when the network device 5 detects that the bearer transmission flow of the terminal is greater than or equal to the flow threshold value set by the network device, and the terminal is released when the network device detects that the bearer transmission flow of the terminal is greater than or equal to the attack threshold value set by the network device. Such can defend the network device (including the base station) against attack from the terminal which would initiate the attack by utilizing high transmission performance under high network transmission requirements.

FIG. 6 is a schematic structural diagram of a system for defending against bearer attack according to a first embodiment of the present invention, where the system can be used for implementing the method embodiments of the present invention; as shown in FIG. 6, the system for defending against bearer attack according to the present invention includes a network device 60 and a terminal bearer configuring gateway 61, in particular, the network device 60 can be any of the network devices shown in FIG. 4 or FIG. 5 of the present invention, and no further details will be given here. The terminal bearer configuring gateway 61 is adapted to configure the bearer transmission flow of the terminal for the terminal, the bearer transmission flow of the terminal being less than or equal to a bearer transmission flow threshold value set by the signaling gateway.

In some possible implementations, the terminal bearer configuring gateway 61 can be a signaling gateway.

In some possible implementations, the terminal bearer configuration gateway 61 can restrain the bearer transmission flow of the terminal when opening an account for the terminal, which plays a role of defending against bearer attack as well.

In some possible implementations, the terminal bearer configuring gateway 61 can set different bearer transmission flow threshold values for different types of terminals. For example, the base station can set different bearer transmission flow threshold values for R8/R9/R10 terminals.

As described above, in some possible implementations of the present invention, resource scheduling is stopped for the terminal when the network device detects that the bearer transmission flow of the terminal is greater than or equal to the flow threshold value set by the network device, and the terminal is released when detecting that the bearer transmission flow of the terminal is greater than or equal to the attack threshold value set by the network device, and the terminal bearer configuring gateway configures the bearer transmission flow of the terminal for the terminal, the bearer transmission flow of the terminal being less than or equal to the bearer transmission flow threshold value set by the terminal bearer configuring gateway. Such can defend the network device (including the base station) against attack from the terminal which would initiate the attack by utilizing high transmission performance under high network transmission requirements.

In a specific implementation, the present invention also provides a computer storage medium storing a program, including a part or all of steps of the method of the system for defending against bearer attack according to various embodiments of the present invention when the program is executed. The storage medium may be a magnetic disk, an optical disk, a read-only memory (Read-Only Memory, ROM) or a random access memory (Random Access Memory, RAM) or the like.

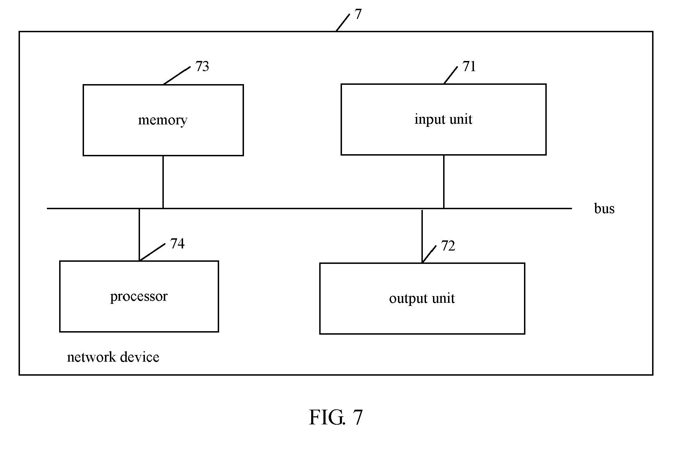

In a specific implementation, as shown in FIG. 7, the present invention also provides a network device 7, including an input unit 71, an output unit 72, a memory 73 and a processor 74 (in a specific implementation, the network device 5 may have a plurality of processors 74, one of which is described in FIG. 7 as an example);

In some possible implementations, the network device 7 includes a base station, a base station controller or an access point.

In some possible implementations, the input unit 71, the output unit 72, the memory 73 and the processor 74 can be connected via a bus or other manners, and a bus connection is described in FIG. 7 as an example.

In some possible implementations, the input unit 71 and the output unit 72 include data interfaces.

In some possible implementations, the processor 74 can perform steps as follows:
stopping resource scheduling for a terminal, when detecting that a bearer transmission flow of the terminal is greater than or equal to a flow threshold value set by the network device.

In some possible implementations, the processor 74 is further configured to perform steps as follows:
releasing the terminal, when detecting that the bearer transmission flow of the terminal is greater than or equal to an attack threshold value set by the network device.

In some possible implementations, the attack threshold value is greater than the flow threshold value.

In some possible implementations, the processor is further configured to perform steps as follows: configuring the bearer transmission flow of the terminal for the terminal, the bearer transmission flow of the terminal being less than or equal to a bearer transmission flow threshold value set by a terminal bearer configuring gateway.

In some possible implementations, the processor sets different bearer transmission flow threshold values for different types of terminals.

In some possible implementations, the processor sets different flow threshold values for terminals in different geographic regions; and/or
the processor sets different flow threshold values for different types of terminals.

In some possible implementations, the processor sets different attack threshold values for terminals in different geographic regions; and/or
the processor sets different attack threshold values for different types of terminals.

It is apparent to persons skilled in the art that modifications and variations can be made without departing from the scope of the present invention. In view of the foregoing, it is intended that the present invention covers these modifications and variations provided that they fall within the scope of the following claims and their equivalents.

## Claims

1. A method for defending against bearer attack, comprising:
stopping resource scheduling for a terminal, when a network device detects that a bearer transmission flow of the terminal is greater than or equal to a flow threshold value set by the network device.

2. The method for defending against bearer attack according to claim 1, further comprising:
releasing the terminal, when the network device detects that the bearer transmission flow of the terminal is greater than or equal to an attack threshold value set by the network device.

3. The method for defending against bearer attack according to claim 2, wherein the attack threshold value is greater than the flow threshold value.

4. The method for defending against bearer attack according to any one of claims 1 to 3, further comprising:
configuring, by a terminal bearer configuring gateway, the bearer transmission flow of the terminal for the terminal, the bearer transmission flow of the terminal being less than or equal to a bearer transmission flow threshold value set by the terminal bearer configuring gateway.

5. The method for defending against bearer attack according to claim 4, wherein the terminal bearer configuring gateway sets different bearer transmission flow threshold values for different types of terminals.

6. The method for defending against bearer attack according to any one of claims 1 to 5, wherein the network device sets different flow threshold values for terminals in different geographic regions; and/or
the network device sets different flow threshold values for different types of terminals.

7. The method for defending against bearer attack according to claim 2 or 3, wherein the network device sets different attack threshold values for terminals in different geographic regions; and/or
the network device sets different attack threshold values for different types of terminals.

8. The method for defending against bearer attack according to any one of claims 1 to 7, wherein the network device comprises a base station, a base station controller or an access point.

9. A network device, comprising:
a detecting module, configured to detect a bearer transmission flow of a terminal dominated by the network device;
a first processing module, configured to stop resource scheduling for the terminal, when the detecting module detects that the bearer transmission flow of the terminal is greater than or equal to a flow threshold value set by the network device.

10. The network device according to claim 9, further comprising:
a second processing module, configured to release the terminal, when the detecting module detects that the bearer transmission flow of the terminal is greater than or equal to an attack threshold value set by the network device.

11. The network device according to claim 10, further comprising:
a setting module, configured to set the flow threshold value and the attack threshold value.

12. The network device according to claim 10, wherein the setting module sets different flow threshold values for terminals in different geographic regions; and/or the setting module sets different flow threshold values for different types of terminals.

13. The network device according to claim 10, wherein the setting module sets different attack threshold values for terminals in different geographic regions; and/or the setting module sets different attack threshold values for different types of terminals.

14. A system for defending against bearer attack, comprising:
a network device, configured to detect a bearer transmission flow of a terminal dominated by the network device, and stop resource scheduling for the terminal, when detecting that the bearer transmission flow of the terminal is greater than or equal to a flow threshold value set by the network device.

15. The system for defending against bearer attack according to claim 14, wherein the network device is further configured to release the terminal, when detecting that the bearer transmission flow of the terminal is greater than or equal to an attack threshold value set by the network device.

16. The system for defending against bearer attack according to claim 14 or 15, further comprising:
a terminal bearer configuring gateway, adapted to configure the bearer transmission flow of the terminal for the terminal, the bearer transmission flow of the terminal being less than or equal to a bearer transmission flow threshold value set by the signaling gateway.

17. The system for defending against bearer attack according to claim 16, wherein the terminal bearer configuring gateway sets different bearer transmission flow threshold values for different types of terminals.

18. The system for defending against bearer attack according to any one of claims 14 to 17, wherein the network device comprises a base station, a base station controller or an access point.

19. A computer storage medium storing a program, comprising a part or all of steps of the method according to any one of claims 1 to 7 when the program is executed.

20. A network device, comprising an input unit, an output unit, a memory and a processor, wherein the processor is configured to perform steps as follows:
stopping resource scheduling for a terminal, when detecting that a bearer transmission flow of the terminal is greater than or equal to a flow threshold value set by the network device.

21. The network device according to claim 20, wherein the processor is further configured to perform steps as follows:
releasing the terminal, when detecting that the bearer transmission flow of the terminal is greater than or equal to an attack threshold value set by the network device.

22. The network device according to claim 21, wherein the attack threshold value is greater than the flow threshold value.

23. The network device according to any one of claims 20 to 22, wherein the processor is further configured to perform steps as follows: configuring the bearer transmission flow of the terminal for the terminal, the bearer transmission flow of the terminal being less than or equal to a bearer transmission flow threshold value set by a terminal bearer configuring gateway.

24. The network device according to claim 23, wherein the processor sets different bearer transmission flow threshold values for different types of terminals.

25. The network device according to any one of claims 20 to 22, wherein the processor sets different flow threshold values for terminals in different geographic regions; and/or
the processor sets different flow threshold values for different types of terminals.

26. The network device according to claims 21 or 22, wherein the processor sets different attack threshold values for terminals in different geographic regions; and/or
the processor sets different attack threshold values for different types of terminals.

27. The network device according to any one of claims 20 to 26, wherein the network device comprises a base station, a base station controller or an access point.
